# EUROPÄISCHE PATENTSCHRIFT

(11) **EP 0 399 078 B1**
(45) Veröffentlichungstag und Bekanntmachung des Hinweises auf die Patenterteilung: **29.06.1994**
(21) Anmeldenummer: 89109466.6
(22) Anmeldetag: 26.05.1989
(51) Int. Cl.: A47J 31/40

(54) **Kolbenkaffeemaschine**
Piston coffee machine
Machine à café express sous pression à piston d'infusion

(43) Veröffentlichungstag der Anmeldung: 28.11.1990
(73) Patentinhaber: SALVIS AG, CH-6015 Reussbühl (CH)
(72) Erfinder: Zehnder, Reto, 5034 Suhr (CH)
(74) Vertreter: Blum, Rudolf Emil Ernst

(56) Entgegenhaltungen:
- DE-C- 625 855
- DE-C- 3 615 158
- FR-A- 789 525
- FR-A- 1 184 141
- FR-A- 2 267 073

## Beschreibung

Die Erfindung betrifft eine Kaffeemaschine nach dem Oberbegriff des Anspruch 1, welche sich für den automatischen Betrieb eignet.

Die sogenannten Kolbenkaffeemaschinen älterer Bauart haben von Hand entfernbare und wieder anfügbare Brühkammern, welche an ihrem Boden das Brühsieb aufweisen. Diese Brühkammern müssen von Hand gefüllt und geleert werden, sind also der Automation nicht zugänglich.

Eine der Automation zugängliche Kolben-Kaffeemaschine (gemäss Oberbegriff des Anspruch 1) ist in der Deutschen Patentschrift DE 36 15 158 C1, "Verfahren zur Zubereitung einer Mehrzahl von Kaffeeportionen", beschrieben. Zu Beginn eines Arbeitsgangs, bei dem von einer Brühstation gleichzeitig eine oder zwei Tassen Kaffee hergestellt werden können, wird die ortsfeste Brühkammer von einer zugehörigen Kaffeemühle her mit der entsprechenden Menge Kaffeepulver von oben befüllt, während der zugehörige Brühkolben in seiner oberen Grundstellung ist. Daran anschliessend wird der Brühkolben soweit in die Brühkammer eingefahren, bis er das Kaffeepulver zu einem Kuchen verdichtet hat. Nun wird dieser Pulverkuchen mit heissem Wasser, das durch den Brühkolben gepumpt wird, gebrüht. Der so entstehende Kaffee fliesst durch das, die Brühkammer unten abschliessende, Brühsieb und anschliessend durch einen oben offenen Ringkanal und einem Rohr in die bereitgestellten Tassen. Ist der Brühvorgang beendet, wird das Brühsieb mit dem Ringkanal soweit zur Seite geschwenkt, dass die Brühkammer unten offen ist. Dann wird durch weiteres Absenken des Brühkolbens der Kaffeesatz unten aus der Brühkammer in den darunter befindlichen Auffangbehälter ausgestossen. Abschliessend wird der Brühkolben dann nach oben wieder aus der Brühkammer ausgefahren und das Brühsieb unter die Brühkammer zurückgeschwenkt. Damit ist die Brühstation für den nächsten Arbeitsgang bereit. Auch dieser Maschine sind jedoch die Nachteile anderer bekannter Maschinen noch eigen, beispielsweise, lange Zykluszeiten und geringe Flexibilität beim Wechsel der Kaffeesorte und/oder des Mahlungsgrades. Sie können selbst bei dieser aufwendigen und teuren bekannten Kaffeemaschine zu unerwünschten Engpassen bei der Kaffeeherstellung führen.

In FR-A 2 267 073 wird eine Kaffeemaschine gezeigt, die einen drehbaren Rotor mit vier Brühkammern aufweist. Unterhalb des Rotors befindet sich eine Platte, in welcher ein Brühsieb und eine Auswurfstelle angeordnet sind. Oberhalb des Rotors ist eine Kaffeepulverquelle angeordnet. Im Betrieb wird durch Drehen des Rotors eine Brühkammer zu Kaffeepulverquelle, Brühsieb und dann zur Auswurfstelle gebracht. Beim Brühsieb wird zum Brühen von oben ein Brühkolben in die Brühkammer geführt. Bei der Auswurfstelle ist ein Auswurfkolben vorgesehen, der den Kaffeesatz nach unten aus der Brühkammer drückt.

Auch diese Lösung weist den Nachteil auf, dass sie nicht zum Betrieb mit mehreren Kaffeesorten geeignet ist, relativ viel Platz bracht und langsam ist.

Der Erfindung liegt die Aufgabe zu Grunde, eine wirtschaftlich vorteilhafte Kaffeemaschine zur Herstellung hochwertigen Kaffees zu schaffen, wobei angestrebt wird, einerseits die Zykluszeit der Kaffeeherstellung gegenüber den bekannten Kolbenkaffeemaschinen zu verkürzen, und andererseits die Möglichkeit geschafft werden soll, nacheinander verschiedene Kaffeearten (andere Kaffeebohnen, anderer Mahlungsgrad etc.) ohne umständliche Manipulationen herstellen zu können. Dabei sollen die Aussenabmessungen der Maschine möglichst kompakt sein.

Zur Lösung dieser Aufgabe wird eine in Anspruch 1 definierte Kaffeemaschine vorgeschlagen.

Im Gegensatz zu FR-A 2 267 073 besitzt die erfindungsgemässe Maschine zwei Brühstationen, von denen jede einen Rotor aufweist. Somit kann die Zykluszeit gesenkt werden. Ausserdem ist ein Teil der Aggregate beiden Brühstationen gemeinsam, was den zusätzlichen Aufwand reduziert.

Eine solche erfindungsgemässe Kaffeemaschine eignet sich ausserordentlich gut zur Herstellung vorzüglichen Kaffees, da das Kaffeepulver gewünschtenfalls erst unmittelbar vor dem Brühen gemahlen und in bekannter Weise vor dem Brühen zu einem Pulverkuchen verdichtet wird.

Bei der erfindungsgemässen Kaffeemaschine ist nicht jedem der beiden Brühkolben je eine ortsfeste Brühkammer zugeordnet, sondern je ein, auf einer unter den Brühkolben liegenden Siebplatte, um je eine vertikal zur Siebplatte stehende Rotorachse drehbarer Rotor, vorgesehen. Jeder Rotor enthält vorzugsweise zwei oben und unten offene, bezüglich der zugehörigen Rotorachse diametral angeordnete Brühkammern. Die Siebplatte weist stationäre, vorzugsweise in sie eingelassene und mit ihrer Oberseite plan abschliessende stationäre Brühsiebe auf. Jeder Brühkolben ist je über einem Brühsieb angeordnet. Jede Brühkammer kann damit durch Drehen ihres Rotors zum zugehörigen Brühkolben und somit über das unter ihm angeordnete Brühsieb gebracht werden.

Die Brühsiebe verbleiben also ortsfest in der Siebplatte, während die mit den Rotoren schwenkbaren Brühkammern das Kaffeepulver vor dem Brühen unter den zugehörigen Brühkolben und nach dem Brühen den Kaffeesatz zur Auswurfstelle transportieren. Für beide Rotoren gemeinsam kann entweder die Kaffeepulver-Füllstation oder die Kaffeesatz-Auswurfstelle sein. Vorzugsweise ist eine gemeinsame Kaffeepulver-Füllstation vorgesehen, während jeder Rotor eine eigene, ihm zugeordnete Kaffeesatz-Auswurfstelle mit einem darüber befindlichen Ausstosser besitzt.

Ist beiden Rotoren eine gemeinsame Kaffeepulver-Füllstation zugeordnet, können beide Brühstationen an der gleichen Stelle mit Kaffeepulver versorgt werden. Ist die Kaffeepulver-Füllstation mit zwei oder mehr Kaffee mühlen versehen, können mit den Brühkammern beider Ro toren alle in der Kaffeepulver-Füllstation vorhandenen Kaffeesorten und Mahlungsgrade "getankt" werden. Auch Dosiermittel können der Kaffeepulver-Füllstation so zugeordnet sein, dass die gewünschte Kaffeepulvermenge für eine oder zwei Tassen Kaffee wohl dosierbar ist. Dies ist besonders vorteilhaft, da so die Flexibilität und zusätzlich die Kapazität der Maschine erhöht wird.

Damit während des Brühens kein Kaffee seitlich zwischen der Rotorunterseite und der Siebplatte austreten kann, ist es vorteilhaft, wenn jede Brühkammer um ihre der Siebplatte zugewandten Oeffnung eine hitzebeständige, druckfeste Dichtung aufweist.

Es sollte ausserdem gewährleistet werden, dass bei jeder Rotordrehbewegung der Kaffeesatz möglichst rückstandslos in der Brühkammer vom Brühsieb entfernt wird, was mit einer geeigneten Dichtung erreichbar scheint.

Besonders vorteilhaft ist es, wenn jeder Rotor durch eine Anpressvorrichtung an die Siebplatte pressbar ist. Dadurch wird während des Brühvorgangs das seitliche Austreten von Kaffee zwischen Rotor und Siebplatte noch sicherer vermieden.

Um eine möglichst kompakte Bauweise der Maschine zu erreichen, ist es bei zwei Rotoren vorteilhaft, jeden Rotor zwischen seinen Brühkammern hantelartig zu taillieren. Die Rotoren können so kürzer ausgebildet und die Rotorachsen näher zusammengerückt werden. Somit können die Abmessungen der Maschine sowohl in der Breite, als auch in der Tiefe reduziert werden.

Um ein einwandfreies Zusammenspiel der beiden Brühstationen zu gewährleisten, ist es vorteilhaft, dass jeder der beiden Rotoren nur dann frei drehbar ist, wenn der andere mit einer seiner beiden Brühkammern unter dem zugehörigen Brühkolben steht.

Die erfindungsgemässe Kaffeemaschine eignet sich, auch in ihren bevorzugten Ausführungsformen, besonders gut zur Automation, wobei man zur Steuerung elektrische Schaltkreise, insbesondere einen Rechner verwenden kann. Der Antrieb kann elektrisch, mechanisch, hydraulisch und/oder pneumatisch erfolgen, wobei auch Kombinationen solcher Antriebe möglich sind. Für den Antrieb der Rotoren eignen sich besonders Schrittmotoren, die vom Rechner aus steuerbar sind.

Natürlich kann eine Kaffeemaschine auch zwei oder mehr solcher Brühstationenpaare aufweisen.

Die Erfindung wird nachstehend anhand der rein schematischen Zeichnung beispielsweise besprochen.

Es zeigen:
Fig. 1 Gesamtschema einer erfindungsgemässen Kaffeemaschine mit zwei Brühstationen in einem teilweisen Schnitt nach Linie I-I in Fig. 2,
Fig. 2 einen Schnitt nach Linie II-II in Fig. 1 ohne Brühkopf-, Auswerfer- und Anpressvorrichtungsteile,
Fig. 3 einen der Fig. 2 ähnlichen Schnitt mit anderer Stellung des linken Rotors, und
Fig. 4 einen der Fig. 3 ähnlichen Schnitt mit einer anderen Stellung des rechten Rotors.

In der Zeichnung sind die Teile wie folgt bezeichnet:
- 1: eine erfindungsgemässe Kaffeemaschine in der gezeichneten Ausführungsform,
- 2: Siebplatte,
- 21: Oberseite von 2, ist 3 und 4 zugewandt,
- 22: Brühsiebe, plan zu 21 in 2 eingelassen,
- 23: linke Kaffeesatz-Auswurfstelle,
- 24: linker Auswerfer,
- 25: rechte Kaffeesatzauswurfstelle,
- 3: linker Rotor, auf 21 und 31 drehbar,
- 31: Rotorachse von 3,
- 32: Brühkammern in 3,
- 33: Dichtung um 32, auf 21 aufliegend,
- 34: Anpressvorrichtung von 3,
- 4: rechter Rotor, auf 21 um 41 drehbar,
- 41: Rotorachse von 4,
- 42: Brühkammern in 4,
- 43: Dichtung um 42, auf 21 aufliegend,
- 5: Kaffeepulver-Füllstation,
- 51: Kaffeepulverschacht,
- 52: Kaffeemühlen mit Dosiereinrichtungen,
- 6: rechter Brühkolben.

Die Erfindung wird anhand einer Kaffeemaschine mit zwei Brühstationen erläutert.

Diese Kaffeemaschine 1 weist eine Siebplatte 2 auf. In der Siebplatte 2 sind zwei Brühsiebe 22 so eingelassen, dass sie mit der Oberseite 21 der Siebplatte 2 plan abschliessen. Auf der Oberseite 21 sind zwei, um ihre zur Siebplatte 2 senkrecht stehende Rotorachsen 31, 41 drehbare Rotoren 3,4 vorgesehen. Die Rotoren 3, 4 weisen je zwei, an ihren Enden offene, Brühkammern 32, 42 auf. Jede Brühkammer 32, 42 wird auf ihrer der Siebplatte zugewandten Seite von einer Dichtung 33,43, welche auf der Oberseite 21 aufliegt, umschlossen.

Die Siebplatte 2 enthält links von der linken und rechts von der rechten Rotorachse 31, 41 je eine Kaffeesatz-Auswurfstelle 23,25. Zwischen den beiden Rotorachsen 31,41 befindet sich eine, beiden Rotoren gemeinsam zugeordnete Kaffeepulver-Füllstation 5.

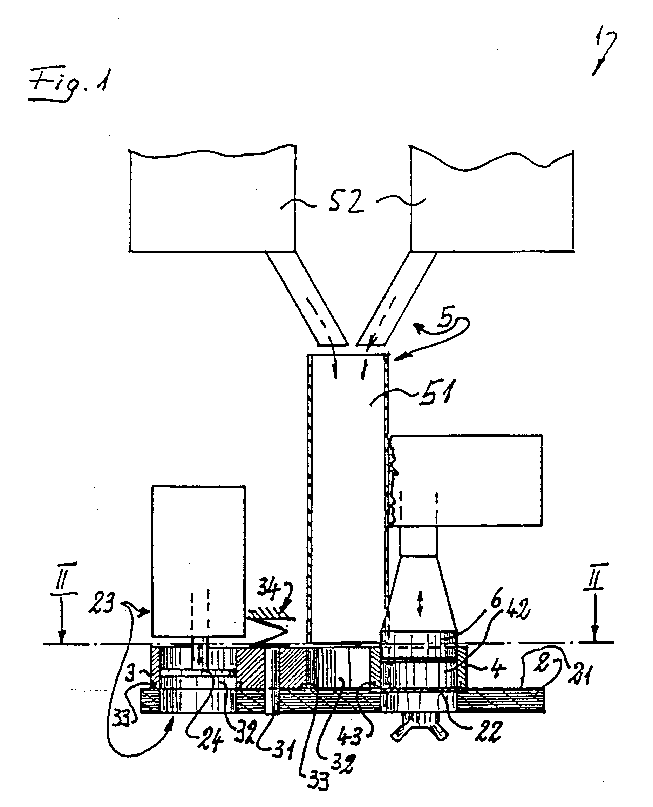

Sollen nun eine oder zwei Tassen Kaffee hergestellt werden, wird, z.B. mittels Drücken einer entsprechenden Vorwahltaste (nicht gezeichnet), der Kaffeemaschinen-Steuerung (nicht gezeichnet) der entsprechende Befehl erteilt. Die beiden Rotoren 3,4 befinden sich in ihrer Ruhe- bzw. Brühstellung (Fig. 3), oder schwenken in diese zurück. So steht je eine ihrer Brühkammern 32,42 über je einem der Brühsiebe 22.

Dann wird beispielsweise der linke Rotor 3, während der rechte Rotor 4 in seiner Brühstellung verbleibt, um eine Vierteldrehung in seine Füll- bzw. Auswurfstellung (Fig. 1 und 2) geschwenkt, in der die eine Brühkammer 32 über der linken Kaffee-Auswurfstelle 23 und die andere Brühkammer 32 unter der Kaffeepulver-Füllstation 5 steht.

Nun wird der linke Auswerfer 24 in die über der Kaffeesatz-Auswurfstelle 23 befindliche Brühkammer 32 so abgesenkt, dass ein, von einem vorhergehenden Brühvorgang stammender, Pulverkuchen nach unten, durch die Kaffeesatz-Auswurfstelle 23, ausgestossen wird. Hernach wird der Auswerfer 24 wieder in seine obere Ruhelage (nicht gezeichnet) angehoben. Während dem Auswerfen des Kaffeesatzes wird gleichzeitig die unter dem Pulverschacht 51 stehende Brühkammer 32 mit der erforderlichen Kaffeepulvermenge befüllt.

Die Kaffeepulver-Füllstation 5 enthält einen Pulverschacht 51 und zwei Kaffeemühlen mit Dosiereinrichtung 52. Natürlich können statt den Kaffeemühlen auch Kaffeepulver-Vorratsbehälter (nicht gezeichnet), oder eine Kombination aus Mühlen und Vorratsbehältern vorgesehen sein.

Nach beendeter Befüllung der Brühkammer 32 wird der Rotor 3 wieder in seine Brühstellung zurückgeschwenkt und der Kaffee kann mit dem linken Brühkolben (nicht gezeichnet) gebrüht werden.

Ist der linke Rotor 3 in Brühstellung, so kann unabhängig vom linken Rotor 3, mit dem rechten Brühkolben 6 ein zuvor gewählter Kaffee in einer, über dem zugehörigen Brühsieb 22 liegenden, Brühkammer 42, des rechten Rotors 4, gebrüht werden. Dabei wird in die, in bereits oben beschriebener Weise mit Kaffeepulver befüllte, Brühkammer 42 der rechte Brühkolben 6 soweit abgesenkt, bis das Kaffeepulver zu einem Pulverkuchen (nicht gezeichnet) verdichtet ist. In bekannter Weise wird nun das heisse Wasser durch den Brühkolben 6 in die Brühkammer 42 gepumpt und so das Kaffeepulver gebrüht. Der Kaffee fliesst dann durch das, die Brühkammer unten abschliessende, Brühsieb 22 und den Ausfluss (in Fig. 1 nur angedeutet) in die darunter befindliche Tasse, bzw. Tassen (nicht gezeichnet). Um den Brühvorgang abzuschliessen, wird der Brühkolben 6 wieder aus der Brühkammer 42 in seine obere Ruhelage zurück gebracht.

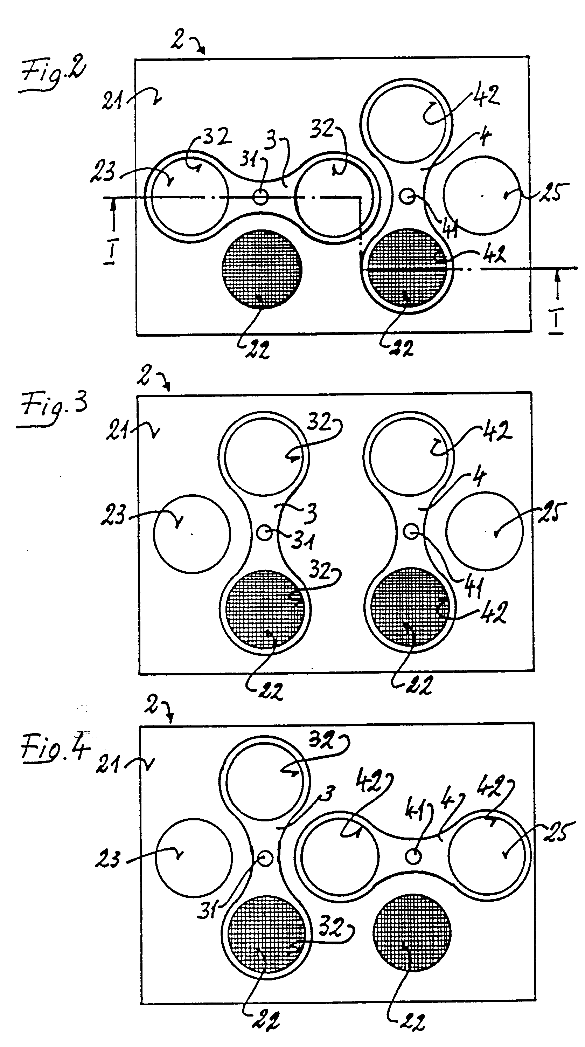

Nun wird der rechte Rotor 4, während der linke Rotor 3 in seiner Brühstellung verbleibt, um eine viertel Drehung in seine Füll- bzw. Auswurfstellung (Fig. 4) geschwenkt, in der seine eine Brühkammer 42 über der rechten Kaffee-Auswurfstelle 25 und seine andere Brühkammer 42 unter der Kaffeepulver-Füllstation 5 steht. In oben beschriebener Weise wird der Pulverkuchen aus der Brühkammer 42 ausgestossen. Soll noch weiterer Kaffee gebrüht werden, kann gleichzeitig die diametral gelegene Brühkammer 42, aus der Kaffeepulver-Füllstation 5, mit Kaffeepulver befüllt werden.

Nachdem der rechte Rotor 4 wieder in seine Ruhe- bzw. Brühstellung zurückgeschwenkt wurde (Fig. 3), ist der linke Rotor 3 unabhängig vom rechten Rotor 4 drehbar, und kann, nach Beendigung des Brühvorgangs in einer seiner Brühkammern 32, zum nächsten Arbeitstakt gedreht werden.

Damit die Dichtungen 33,43 ihrer Aufgabe voll gerecht werden können, und beim Brühen kein Kaffee zwischen Rotor 3, 4 und Siebplatte 2 austreten kann, wird jeder Rotor 3,4 mittels einer Anpressvorrichtung 34 (nur für linken Rotor in Fig. 1 gezeichnet) auf die Siebplatte gepresst. Diese Anpressvorrichtung 34 kann pneumatisch, hydraulisch oder rein mechanisch, z.B. wie hier als Feder, ausgebildet sein.

Wie sich aus der vorstehenden Beschreibung ergibt, kann somit ständig eine der Brühkammern in Betrieb sein. Es kann damit praktisch ohne Unterbrechung Kaffee gebrüht werden. Während beim einen Rotor der Brühvorgang abläuft, kann beim anderen der verbrauchte Pulverkuchen ausgestossen und eine der Brühkammern neu mit Kaffeepulver befüllt werden.

Die Koordination der beschriebenen Vorgänge zur Automatisierung der Kaffeemaschine wird von der zentralen Steuerung übernommen, welche in Form eines programmierbaren Prozessors ausgebildet ist. Für den Antrieb der beiden Rotoren wird vorzugsweise je ein Schrittmotor eingesetzt, der vom Prozessor ansteuerbar ist und seine jeweilige Stellung an diesen zurückmeldet. Durch entsprechende Programmierung kann eine optimale Betriebssequenz eingehalten und es können Fehlfunktionen durch entsprechende logische Verknüpfungen verhindert werden. Insbesondere kann eine gegenseitige Störung der beiden Rotoren damit ausgeschlossen werden.

## Patentansprüche

1. Kaffeemaschine, insbesondere für den automatischen Betrieb, wobei eine Siebplatte (2) mit zwei stationären Brühsieben (22) und mit Kaffeesatz-Auswurfstellen (23, 25) sowie zwei voneinander unabhängig betätigbare Brühstationen vorgesehen sind, wobei jeder Brühstation ein Rotor (3, 4) und ein über einem der Brühsiebe angeordneter Brühkolben (6) zugeordnet ist, wobei jeder Rotor um eine zur Siebplatte (2) vertikale Achse drehbar ist und je mindestens eine beiderends offene Brühkammer (32, 42) aufweist, in welche Brühkammer der zugehörige Brühkolben beim Brühen einfahrbar und wieder ausfahrbar ist, und wobei jede Brühkammer vor dem Eintritt des Brühkolbens von einer Kaffeepulverquelle von oben her mit Kaffeepulver füllbar und nach dem Brühen der Kaffeesatz aus ihr nach unten ausstossbar ist, das Ganze dergestalt, dass jede Brühkammer (32, 42) durch Drehen ihres Rotors (3, 4) zu ihrem Brühkolben (6), zur Kaffeesatz-Auswurfstelle (23, 25) und zur Kaffeepulver-Füllstation (5) bringbar ist, wobei entweder die Kaffeepulver-Füllstation (5) oder die Kaffeesatz-Auswurfstelle beiden Rotoren (3, 4) gemeinsam ist.

2. Kaffeemaschine nach Anspruch 1, dadurch gekennzeichnet, dass jeder Rotor (3, 4) zwei, bezüglich der zugehörigen Rotorachse (31, 41) diametral angeordnete Brühkammern (32, 42), besitzt.

3. Kaffeemaschine nach Anspruch 2, dadurch gekennzeichnet, dass jeder Rotor (3, 4) zwischen seinen Brühkammern (32, 42) hantelartig tailliert ist.

4. Kaffeemaschine nach einem der Ansprüche 2 oder 3, dadurch gekennzeichnet, dass jeder der beiden Rotoren (3, 4) nur dann frei drehbar ist, wenn der andere Rotor (4, 3) mit einer seiner beiden Brühkammern (22) unter dem zugehörigen Brühkolben (6) ist.

5. Kaffeemaschine nach einem der vorangehenden Ansprüche, dadurch gekennzeichnet, dass für jeden der beiden Rotoren (3, 4) eine eigene Kaffeesatz-Auswurfstelle (23, 25) vorgesehen ist, und dass für beide Rotoren (3, 4) eine gemeinsame Kaffeepulver-Füllstation (5) vorgesehen ist.

6. Kaffeemaschine nach einem der vorangehenden Ansprüche, dadurch gekennzeichnet, dass jede Brühkammer (32, 42) um ihre der Siebplatte (2) zugewandte Oeffnung eine hitzebeständige druckfeste Dichtung (33) aufweist.

7. Kaffeemaschine nach einem der vorangehenden Ansprüche, dadurch gekennzeichnet, dass jeder Rotor (3, 4) durch eine Anpressvorrichtung (34) an die Siebplatte (2) pressbar ist.

8. Kaffeemaschine nach einem der vorangehenden Ansprüche, dadurch gekennzeichnet, dass jedes Brühsieb (22) plan zu der den Rotoren (3, 4) zugewandten Seite (21) der Siebplatte (2) angeordnet ist.

9. Kaffeemaschine nach einem der vorangehenden Ansprüche, dadurch gekennzeichnet, dass jeder Kaffeesatz-Auswurfstelle (23, 25) ein in eine dort befindliche Brühkammer (22) einführbarer und wieder zurückziehbarer Auswerfer (24) zugeordnet ist.

10. Kaffeemaschine nach einem der vorangehenden Ansprüche, dadurch gekennzeichnet, dass die Kaffeepulver-Füllstation (5) wenigstens eine Kaffeemühle und/oder wenigstens einen Kaffeepulver-Vorratsbehälter aufweist.

11. Kaffeemaschine nach einem der vorangehenden Ansprüche, dadurch gekennzeichnet, dass die Rotoren (3, 4) motorisch angetrieben sind, wobei ihre Positionen mittels einer Steuerung mit den Funktionen der Kaffeepulverquelle, der Brühkolben und der Kaffeesatz-Auswurfstellen koordiniert sind.

12. Kaffeemaschine nach Anspruch 11, dadurch gekennzeichnet, dass die Steuerung einen Rechner aufweist und die Rotorantriebe als vom Rechner ansteuerbare Schrittmotoren ausgebildet sind.

## Claims

1. Coffee machine, specifically for the automatic operation, whereby a strainer plate (2) with two stationary brewing strainers (22) and with coffee-grounds ejector points (23, 25) and two independently from each other operable brewing stations are foreseen, as well, whereby a rotor (3, 4) and a brewing piston (6) located over one of the brewing strainers are allocated to each brewing station, whereby each rotor is rotatable around an axis which is vertical relative to the strainer plate and each comprises a brewing chamber (32, 42) open at both ends, in which brewing chamber the thereto allocated piston is insertable and extractable during brewing, and whereby each brewing chamber is fillable prior to the entry of the brewing piston from above from a source of ground coffee and after the brewing the coffee is ejectable from it downwards, the entire structure in such a manner that each brewing chamber (32, 42) is transportable by rotating of its rotor (3, 4) to its brewing piston (6), to the coffee-grounds ejector point (23, 25) and to the ground coffee filling station (5), whereby either the ground coffee filling station (5) or the coffee grounds ejector point is common to both rotors (3, 4).

2. Coffee machine according to claim 1, characterized in that each rotor (3, 4) possesses two brewing chambers (31, 41) arranged diametrically relative to the corresponding rotor axis (31, 41).

3. Coffee machine according to claim 2, characterized in that every rotor (3, 4) is reduced in a dumbbell manner between its brewing chambers (32, 42).

4. Coffee machine according to one of the claims 2 or 3, characterized in that each of both rotors (3, 4) is only then freely rotatable when the other rotor (4, 3) is with one of its two brewing chambers (22) under the allocated brewing piston (6).

5. Coffee machine according to one of the preceding claims, characterized in that an own coffee-grounds ejector point (23, 25) is foreseen for each of the two rotors (3, 4), and that one common ground coffee filling station (5) is foreseen for both rotors (3, 4).

6. Coffee machine according to one of the preceding claims, characterized in that each brewing chamber (32, 42) comprises a heat-resistant, pressure-resistant seal (33) around its opening facing the strainer plate.

7. Coffee machine according to one of the preceding claims, characterized in that every rotor (3, 4) is pressable onto the strainer plate (2) by a pressing-on device (34).

8. Coffee machine according to one of the preceding claims, charactered in that every brewing strainer (22) is arranged planarly relative to the side (21) of the strainer plate (2) facing the rotors (3, 4).

9. Coffee machine according to one of the preceding claims, characterized in that an ejector (24) is allocated to every coffee-grounds ejector point (23, 25) insertable into and again extractable out of a brewing chamber (22) located thereat.

10. Coffee machine according to one of the preceding claims, characterized in that every ground coffee filling station (5) includes at least one coffee grinder and/or at least one ground coffee storage container.

11. Coffee machine according to one of the preceding claims, characterized in that the rotors (3, 4) are motor driven, whereby their positions are coordinated by means of a controller with the functions of the source of ground coffee, the brewing piston and the coffee grounds ejecting point.

12. Coffee machine according to claim 11, characterized in that the controller includes a computer and the rotor drives are designed as step-motors controllable by the computer.

## Revendications

1. Machine à café, en particulier pour l'utilisation en mode automatique, comportant une plaque formant passoire (2) avec deux passoires d'extraction stationnaires (22) et des postes d'évacuation (23, 25) de marc de café ainsi que deux postes d'extraction utilisables de façon indépendante, un rotor (3, 4) ainsi qu'un piston d'extraction (6) disposé au-dessus d'une des passoires d'extraction étant associés à chacun des postes d'extraction, chaque rotor pouvant tourner autour d'un axe vertical par rapport à la plaque formant passoire (2) et comportant au moins une chambre d'extraction (32, 42) ouverte aux deux extrémités et dans laquelle le piston d'extraction correspondant peut entrer et sortir lors de l'extraction, chaque chambre d'extraction pouvant être remplie par le haut de café en poudre à partir d'une source de café en poudre avant l'entrée du piston d'extraction puis vidée par le bas du marc de café qu'elle contient après l'extraction, le tout étant réalisé en amenant chacune des chambres d'extraction (32, 42) par rotation de son rotor (3, 4) vers son piston d'extraction (6), vers le poste d'évacuation de marc de café (23, 25), et vers le poste (5) d'alimentation en café en poudre, les deux rotors (3, 4) ayant en commun soit le poste (5) d'alimentation en café en poudre, soit le poste d'évacuation de marc de café.

2. Machine à café selon la revendication 1, caractérisée en ce que chaque rotor (3, 4) possède deux chambres d'extraction (32, 42) diamétralement opposées par rapport à l'axe de rotor (31, 41) correspondant.

3. Machine à café selon la revendication 2, caractérisée en ce qu'entre ses chambres d'extraction (32, 42) chaque rotor (3, 4) possède une taille amincie en forme d'haltère.

4. Machine à café selon une des revendications 2 ou 3, caractérisée en ce que chacun des deux rotors (3, 4) ne tourne librement que lorsque l'une des deux chambres d'extraction (22) de l'autre rotor (4, 3) se trouve sous le piston d'extraction (6) correspondant.

5. Machine à café selon l'une des revendications précédentes, caractérisée en ce qu'il est prévu un poste d'évacuation (23, 25) de marc de café séparé pour chacun des deux rotors (3, 4) et qu'un poste commun (5) d'alimentation en café est prévu pour les deux rotors (3, 4).

6. Machine à café selon l'une des revendications précédentes, caractérisée en ce que chaque chambre d'extraction (32, 42) présente un joint (33) résistant à la chaleur et à la pression autour de son ouverture faisant face à la plaque formant passoire (2).

7. Machine à café selon l'une des revendications précédentes, caractérisée en ce que chaque rotor (3, 4) peut être pressé contre la plaque formant passoire (2) au moyen d'un dispositif presseur (34).

8. Machine à café selon l'une des revendications précédentes, caractérisée en ce que chaque passoire d'extraction (22) est agencée à plat du côté (21) de la plaque (2) formant passoire faisant face aux rotors (3, 4).

9. Machine à café selon l'une des revendications précédentes, caractérisée en ce qu'il est associé à chaque poste (23, 25) d'évacuation de marc de café un éjecteur (24) pouvant être introduit dans une chambre d'extraction (22) qui s'y trouve et retiré de celle-ci.

10. Machine à café selon l'une des revendications précédentes, caractérisée en ce que le poste (5) d'alimentation en café en poudre comporte au moins un moulin à café et/ou au moins un réservoir de café en poudre.

11. Machine à café selon l'une des revendications précédentes, caractérisée en ce que les rotors (3, 4) sont mus par des moteurs, un dispositif de commande synchronisant leurs positions avec le fonctionnement de la source de café, des pistons d'extraction et du poste d'évacuation de marc de café.

12. Machine à café selon la revendication 11, caractérisée en ce que le dispositif de commande comporte un ordinateur et que les rotors sont actionnés par des moteurs pas-à-pas commandés par l'ordinateur.
